# FASCICULE DE BREVET EUROPEEN

(11) **EP 2 950 412 B1**
(45) Date de publication et mention de la délivrance du brevet: **13.06.2018**
(21) Numéro de dépôt: 15165732.7
(22) Date de dépôt: 29.04.2015
(51) Int. Cl.: H02H 3/16, B60H 1/22, B60R 16/03

(54) **DISPOSITIF ÉLECTRIQUE OU ÉLECTRONIQUE A DEUX TENSIONS D'ALIMENTATION**
ELEKTRISCHE ODER ELEKTRONISCHE VORRICHTUNG MIT ZWEI EINGANGSSPANNUNGEN
ELECTRICAL OR ELECTRONIC DEVICE WITH TWO INPUT VOLTAGES

(30) Priorité: 27.05.2014 FR 1454764
(43) Date de publication de la demande: 02.12.2015
(73) Titulaire: VALEO SYSTEMES THERMIQUES, 78320 Le Mesnil Saint-Denis (FR)
(72) Inventeur: Fournier, Jonathan, 78160 LE PERRAY-EN-YVELINES (FR); Bigey, Mickael, 28410 ABONDANT (FR)
(74) Mandataire: Metz, Gaëlle

(56) Documents cités:
- EP-A1- 2 711 248
- WO-A2-2012/131235
- DE-A1- 10 232 941
- DE-A1- 10 248 415

## Description

La présente invention concerne les dispositifs électriques ou électroniques nécessitant deux tensions d'alimentation distinctes.

L'invention concerne notamment, bien que non exclusivement, le domaine des véhicules motorisés où certains équipements doivent être conçus pour fonctionner avec deux tensions d'alimentation de valeurs distinctes, typiquement une tension basse de l'ordre de 12 volts, et une tension moyenne de l'ordre de 48 volts.

Pour ce type d'équipements, une spécification définissant notamment certaines règles d'architecture et des tests de validation est actuellement en cours de développement par un Consortium de constructeurs automobiles. Cette spécification (« Electrical and Electronic components in the vehicle 48 V - vehicle electrical system, Requirement and tests », spécification 148 du 29/08/2011) requiert en particulier :
- que tout équipement 12 volts/48 volts possède une masse commune, et inclue une interface de connectique 12 volts pour permettre sa connexion au réseau véhicule de 12 volts, et une interface de connectique 48 volts pour permettre sa connexion au réseau véhicule de 48 volts, chaque interface de connectique ayant sa propre connexion de masse ;
- que tout équipement 12 volts/48 volts satisfasse à un test de mesure des courants de fuite, de manière à garantir que les alimentations de 48 volts et de 12 volts sont bien protégées contre ces courants de fuite.

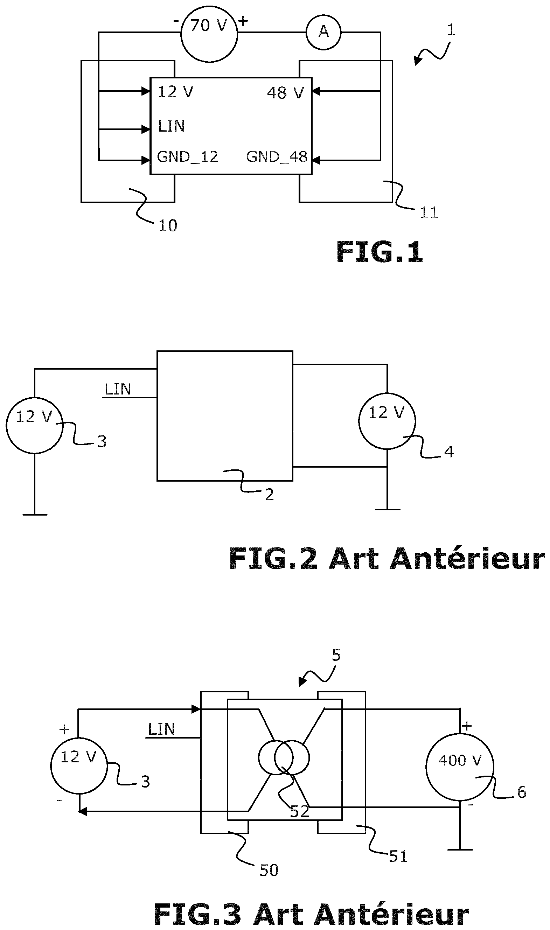

La figure 1 illustre schématiquement le montage réalisé pour le test de validation relatif aux courants de fuite d'un dispositif électrique ou électronique 1 comprenant une première interface connectique 10 pour le 12 volts (masse et alimentation continue à 12 volts) et pour une connexion à un bus LIN (initiales anglo-saxonnes mises pour Local Interconnect Network ou en langue française réseau d'interconnexion local ; on notera de plus que le bus LIN est un bus système série), et une seconde interface connectique 11 pour le 48 volts (masse et alimentation continue à 48 volts).

Ce test consiste à relier, comme représenté sur la figure 1, toutes les entrées/sorties de la première interface de connectique 10 à une première borne d'un générateur de tension continue, à relier les entrées de la seconde interface de connectique 11 à la deuxième borne du générateur de tension continue, à appliquer une tension de 70 volts au moyen du générateur de tension continue, et à mesurer le courant par un ampèremètre classique. Le dispositif électrique ou électronique 1 est validé si, lors de ce test, le courant mesuré reste inférieur ou égal à 1 microampère (en valeur absolue).

On connaît déjà des architectures de dispositifs électriques ou électroniques susceptibles de fonctionner avec deux tensions d'alimentation. La figure 2 illustre en particulier de façon schématique un module réchauffeur additionnel 2 qui utilise pour son alimentation deux tensions de 12 volts, l'une à faible puissance, représentée par le générateur de tension 3, l'autre à une puissance plus forte, typiquement de l'ordre de 1000 à 1200 watts, représentée par le générateur de tension 4. Un tel réchauffeur additionnel est utilisé au démarrage d'un véhicule automobile pour réchauffer plus rapidement l'habitacle. L'alimentation à faible puissance 3 est utilisée pour la gestion et l'interface du module 2 alors que l'alimentation à plus forte puissance 4 est utilisée pour alimenter les résistances chauffantes (non représentées) contenues dans le module. Comme on le voit sur l'architecture de la figure 2, seule la masse du générateur de tension 4 est connectée au module. De plus, l'entrée de données LIN du module est alimentée par le générateur de tension 3 et la masse du générateur 4. Une telle architecture ne pourrait donc pas être utilisée pour un dispositif 12 volts/48 volts conforme à la spécification citée ci-dessus qui impose deux masses distinctes pour chaque réseau d'alimentation. Enfin, une telle architecture appliquée à un dispositif 12 volts/48 volts ne permettrait pas de protéger le bus LIN contre les courants de fuite entre l'alimentation 48 volts et l'entrée de données LIN du module. En particulier, le test de validation relatif aux courants de fuite décrit ci-avant en référence à la figure 1 ne pourrait pas être effectué sans risquer de détruire le sous-module d'émission/réception LIN.

La figure 3 représente schématiquement une autre architecture connue de dispositif électrique ou électronique 5 utilisée dans les véhicules automobiles électriques. Ici, le dispositif 5 est alimenté, au travers de deux interfaces de connectique 50 et 51, avec deux tensions très différentes, une première tension faible de l'ordre de 12 volts, représentée par le générateur de tension 3, et une deuxième tension très haute, de l'ordre de 400 volts, représentée par le générateur de tension 6. Pour des questions de sécurité, ce type de dispositif 5 doit comporter obligatoirement un transformateur d'isolement 52 afin de créer une isolation galvanique entre l'alimentation à 12 volts et l'alimentation à 400 volts.

Une architecture similaire pourrait être utilisée pour réaliser un dispositif électrique ou électronique 12 volts/48 volts compatible avec la spécification citée ci-avant. Néanmoins, cette solution est coûteuse et encombrante, du fait de l'utilisation d'un transformateur d'isolement, et reste complexe à mettre en oeuvre.

L'invention a pour objectif de pallier les inconvénients précédents en proposant une architecture simple de dispositif électrique ou électronique à deux tensions d'alimentation, par exemple 12 volts/48 volts, qui réponde aux exigences de la spécification relatives à la présence de deux bornes de masse, et qui permette de protéger le sous-module d'émission/réception LIN lors d'un test de validation relatif aux courants de fuite.

La présente invention répond à cet objectif en proposant un dispositif électrique ou électronique apte à être alimenté en fonctionnement par une première valeur de tension générée par un premier réseau électrique et par une deuxième valeur de tension supérieure à la première valeur de tension et générée par un deuxième réseau électrique, le dispositif comportant :
- une première interface de connectique apte à être reliée, dans des conditions de liaison normales, à un conducteur de masse et un conducteur de tension du premier réseau électrique et à un bus système série apte à véhiculer des données ;
- une deuxième interface de connectique apte à être reliée à un conducteur de masse et un conducteur de tension du deuxième réseau électrique ;
   chaque interface de connectique comportant une connexion de masse et les connexions de masse des deux interfaces de connectique étant reliées ensemble pour former une masse commune ;
- un module de pilotage alimenté par la première valeur de tension et apte à recevoir et/ou émettre les données sur ledit bus ; et
- au moins un module interrupteur interposé en série entre ledit bus et le module de pilotage, le module interrupteur étant apte à basculer d'une part, dans une position fermée, lors de l'envoi et/ou la réception de données, et d'autre part, dans une position ouverte lorsque toutes les entrées/sorties de la première interface de connectique sont reliées ensemble.

Par conditions de liaison normales, on entend les liaisons nécessaires au fonctionnement normal du dispositif, c'est-à-dire les connexions habituelles des interfaces de connectique aux deux réseaux électriques.

Selon d'autres caractéristiques possibles particulièrement avantageuses :
- ledit bus système série est un bus LIN ;
- ladite deuxième interface de connectique est apte à être reliée audit conducteur de masse et audit conducteur de tension du deuxième réseau électrique dans lesdites conditions normales,
- le module interrupteur peut comporter un transistor MOSFET alimenté en tension par le premier réseau électrique ;
- le module interrupteur est associé à une diode anti-retour apte à empêcher tout courant de circuler vers la première interface de connectique lorsque le module interrupteur est en position ouverte ;
- le dispositif électrique ou électronique est un noeud maître dans un réseau LIN ;
- le dispositif électronique ou électronique est un noeud esclave dans un réseau LIN.

L'invention et les avantages qu'elle procure seront mieux compris au vu de la description suivante d'un exemple non limitatif de mise en oeuvre de l'invention, faite en référence aux figures annexées, dans lesquelles :
- la figure 1, déjà décrite ci-avant, représente schématiquement le circuit électrique équivalent pour un test de mesure de courant de fuite d'un dispositif 12 volts/ 48 volts prescrit par la spécification 148 précitée ;
- la figure 2, déjà décrite ci-avant, illustre schématiquement une architecture connue pour un dispositif utilisant deux tensions d'alimentation de 12 volts ;
- la figure 3, déjà décrite ci-avant, illustre schématiquement une architecture connue pour un dispositif utilisant une tension d'alimentation de 12 volts et une tension d'alimentation de 400 volts ;
- la figure 4 illustre schématiquement un exemple d'architecture d'un dispositif électrique ou électronique à deux tensions d'alimentation, par exemple 12 volts/48 volts, conforme à la présente invention ;
- la figure 5 représente un exemple de réseau LIN dont certains noeuds sont des dispositifs électriques ou électroniques à deux tensions d'alimentation conformes à l'invention.

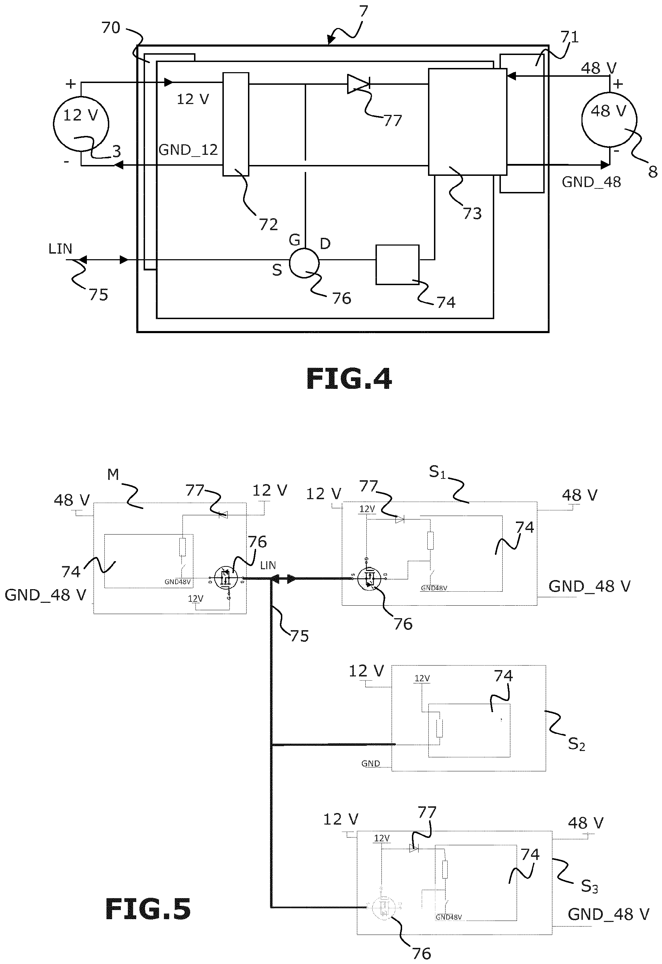

La figure 4 représente un dispositif électrique ou électronique 7 selon un mode de réalisation possible de l'invention, dans le cadre non limitatif d'une double alimentation 12 volts/48 volts. Ce dispositif 7 est représenté dans ses conditions normales d'utilisation, c'est-à-dire recevant une première tension d'alimentation de 12 volts d'un premier réseau à 12 volts (représenté par un générateur de tension 3), et une deuxième tension d'alimentation plus élevée, typiquement de l'ordre de 48 volts, d'un second réseau (représenté par un générateur de tension 8).

Pour ce faire, le dispositif 7 comporte :
- une première interface de connectique 70 apte à être reliée aux deux bornes du générateur de tension 3, c'est-à-dire en pratique au conducteur de masse GND_12 et au conducteur de tension 12 volts du premier réseau à 12 volts ;
- une deuxième interface de connectique 71 apte à être reliée aux deux bornes du générateur de tension 8, c'est-à-dire en pratique au conducteur de masse GND_48 et au conducteur de tension 48 volts du second réseau à 48 volts.

A l'intérieur du dispositif 7, les connexions de masse des deux interfaces de connectique 70 et 71 sont reliées ensemble pour former une masse commune.

Entre les deux interfaces de connectiques 70 et 71, le dispositif 7 comporte, de manière préférentielle, un module 72 de filtrage EMC (initiales anglo-saxonnes mises pour Electro Magnetic Compatibility) pour supprimer de possibles variations de tensions, et un module 73 d'interface 12 volts/ 48 volts qui intègre les fonctionnalités propres au dispositif. Par exemple, si le dispositif 7 est un réchauffeur additionnel, le module 73 comportera les composants de gestion et l'interface ainsi que les résistances chauffantes.

Le dispositif 7 comporte également un module 74 de pilotage LIN, par exemple alimenté en 12 volts, qui est apte à recevoir et/ou émettre des données LIN sur un bus LIN 75.

Le dispositif 7 comporte en outre un module interrupteur 76 en série entre le bus LIN 75 et le module 74 de pilotage LIN, associé à une diode anti-retour 77. Le module interrupteur 76 est de préférence un transistor de type MOSFET alimenté par le réseau 12 volts, c'est-à-dire dont la source S et le drain D sont reliés respectivement à la connexion de masse du module de connectique 70 et à la connexion de masse du module de connectique 71, et dont la grille G reçoit la tension 12 volts.

La présence de ce module interrupteur 76 va permettre de protéger les composants LIN lorsque le dispositif 7 est soumis au test de mesure des courants de fuite. En effet, en réalisant ce test (conformément au schéma électrique de la figure 1), toutes les entrées/sorties de la première interface de connectique 70 sont reliées entre elles, de sorte que la tension V_{GS} devient nulle, même en appliquant la tension de 70 volts imposée par le test, et fait basculer le transistor 76 dans sa position ouverte. La diode anti-retour 77 garantit quant à elle qu'aucun courant ne pourra circuler dans l'autre sens, c'est-à-dire depuis la deuxième interface de connectique 71 vers la première interface de connectique 70.

La présence de ce module interrupteur 76 est par contre sans incidence sur le fonctionnement normal du dispositif 7, en particulier au niveau des échanges de données LIN qui sont susceptibles d'intervenir sur le bus LIN 75. La figure 5 donne, à titre d'exemple non limitatif, une architecture d'un réseau LIN susceptible d'équiper un véhicule automobile. On rappelle qu'un réseau LIN consiste à relier plusieurs équipements intelligents, encore appelés noeuds du réseau, qui communiquent entre eux selon un protocole de communication qui s'appuie sur une configuration maître-esclaves. Dans cet exemple, le réseau comporte un noeud maître M et trois noeuds esclaves notés respectivement S₁, S₂, S₃. Le noeud maître M et les deux noeuds esclaves S₁ et S₃ sont ici des dispositifs à deux alimentations conformes à la présente invention. Le noeud esclave S₂ est en revanche un dispositif électronique alimenté seulement en 12 volts. Pour ne pas surcharger inutilement la figure 5, seuls ont été représentés le module 74 de pilotage LIN pour chaque noeud, l'interrupteur 76 associé à la diode anti-retour 77 pour les noeuds M, S₁ et S₃, les différentes connexions aux deux alimentations 12 volts et 48 volts, et le bus LIN 75. Comme visible sur la figure 5, les différents modules 74 de pilotage LIN comportent un interrupteur de type NPN utilisé en mode collecteur ouvert, c'est-à-dire en série avec une résistance de tirage entre les bornes de l'alimentation 12 volts. Avec une telle implémentation, les différents noeuds doivent échanger des messages à zéro volt, dits « messages dominants », sur le bus 75. Plus précisément, lorsque le noeud maître M doit émettre un message dominant sur le bus 75, l'interrupteur de son module 74 de pilotage est en position fermée de manière à imposer un zéro logique sur le bus 75. La tension drain-grille des modules interrupteurs 76 inclus dans les noeuds esclaves S₁ et S₃ est alors égale à 12 volts, ce qui correspond à des modules interrupteurs en position fermée. Ainsi, le message dominant émis par le noeud maître M arrive bien à l'entrée des modules 74 de pilotage LIN de l'ensemble des noeuds esclaves. Si à présent le noeud esclave S₁ souhaite émettre un message dominant sur le bus LIN 75, son module 74 de pilotage impose également un zéro logique sur le drain de son module interrupteur 76. Ce dernier se ferme et relie son drain à sa source. Ici encore, le message dominant peut donc bien être véhiculé sur le bus LIN 75.

Bien que l'invention ait été décrite dans le cadre de l'application 12 volts/48 volts du domaine automobile, elle peut trouver un intérêt dans tous les cas où un dispositif requiert une double alimentation à des valeurs de tension dites sécuritaires. En outre, le bus LIN peut être tout autre bus système série.

## Revendications

1. Dispositif électrique ou électronique (7) apte à être alimenté en fonctionnement par une première valeur de tension générée par un premier réseau électrique (3) et par une deuxième valeur de tension supérieure à la première valeur de tension et générée par un deuxième réseau électrique (8), le dispositif comportant :
- une première interface (70) de connectique apte à être reliée, dans des conditions de liaison normales, à un conducteur de masse et un conducteur de tension du premier réseau électrique (3) et à un bus système série (75) apte à véhiculer des données ;
- une deuxième interface (71) de connectique apte à être reliée à un conducteur de masse et un conducteur de tension du deuxième réseau électrique (8) ;
chaque interface de connectique (70, 71) comportant une connexion de masse et les connexions de masse des deux interfaces de connectique (70, 71) étant reliées ensemble pour former une masse commune ;
- un module (74) de pilotage alimenté par la première valeur de tension et apte à recevoir et/ou émettre les données sur ledit bus (75) ; et
- au moins un module interrupteur (76) interposé en série entre ledit bus (75) et le module (74) de pilotage, le module interrupteur (76) basculant d'une part, dans une position fermée, lors de l'envoi et/ou la réception de données, et d'autre part, dans une position ouverte lorsque toutes les entrées/sorties de la première interface de connectique (70) sont reliées ensemble.

2. Dispositif selon la revendication 1, **caractérisé en ce que** ledit bus système série (75) est un bus LIN.

3. Dispositif selon l'une quelconque des revendications précédentes, **caractérisé en ce que** ladite deuxième interface (71) de connectique est apte à être reliée audit conducteur de masse et audit conducteur de tension du deuxième réseau électrique (8) dans lesdites conditions normales.

4. Dispositif selon l'une quelconque des revendications précédentes, **caractérisé en ce que** ledit module interrupteur (76) comporte un transistor MOSFET alimenté en tension par le premier réseau électrique (3).

5. Dispositif selon l'une quelconque des revendications précédentes, **caractérisé en ce que** le module interrupteur (76) est associé à une diode anti-retour (77) apte à empêcher tout courant de circuler vers la première interface de connectique (70) lorsque le module interrupteur (76) est en position ouverte.

6. Dispositif selon l'une quelconque des revendications précédentes, **caractérisé en ce qu'**il constitue un noeud maître dans un réseau LIN.

7. Dispositif selon l'une quelconque des revendications 1 à 5, **caractérisé en ce qu'**il constitue un noeud esclave dans un réseau LIN.

8. Dispositif selon l'une quelconque des revendications précédentes, **caractérisé en ce que** la première valeur de tension est de l'ordre de 12 volts, et la deuxième valeur de tension est de l'ordre de 48 volts.

## Patentansprüche

1. Elektrische oder elektronische Vorrichtung (7), die im Betrieb mit einem ersten Spannungswert, der von einem ersten Stromnetz (3) erzeugt wird, und mit einem zweiten Spannungswert, der höher als der erste Spannungswert ist und von einem zweiten Stromnetz (8) erzeugt wird, versorgt werden kann, wobei die Vorrichtung aufweist:
- eine erste Anschlussschnittstelle (70), die unter normalen Verbindungsbedingungen mit einem Masseleiter und einem Spannungsleiter des ersten Stromnetzes (3) und mit einem Reihen-Systembus (75) verbunden werden kann, der Daten transportieren kann;
- eine zweite Anschlussschnittstelle (71), die mit einem Masseleiter und einem Spannungsleiter des zweiten Stromnetzes (8) verbunden werden kann;
wobei jede Anschlussschnittstelle (70, 71) einen Masseanschluss aufweist und die Masseanschlüsse der zwei Anschlussschnittstellen (70, 71) miteinander verbunden sind, um eine gemeinsame Masse zu bilden;
- ein Steuermodul (74), das mit dem ersten Spannungswert versorgt wird und fähig ist, die Daten auf dem Bus (75) zu empfangen und/oder zu senden; und
- mindestens ein Schaltermodul (76), das in Reihe zwischen den Bus (75) und das Steuermodul (74) eingefügt wird, wobei das Schaltermodul (76) einerseits beim Senden und/oder Empfang von Daten in eine geschlossene Stellung umschaltet, und andererseits, wenn alle Eingänge/Ausgänge der ersten Anschlussschnittstelle (70) miteinander verbunden sind, in eine offene Stellung umschaltet.

2. Vorrichtung nach Anspruch 1, **dadurch gekennzeichnet, dass** der Reihen-Systembus (75) ein LIN-Bus ist.

3. Vorrichtung nach einem der vorhergehenden Ansprüche, **dadurch gekennzeichnet, dass** die zweite Anschlussschnittstelle (71) unter den normalen Bedingungen mit dem Masseleiter und mit dem Spannungsleiter des zweiten Stromnetzes (8) verbunden werden kann.

4. Vorrichtung nach einem der vorhergehenden Ansprüche, **dadurch gekennzeichnet, dass** das Schaltermodul (76) einen MOSFET-Transistor aufweist, der vom ersten Stromnetz (3) mit Spannung versorgt wird.

5. Vorrichtung nach einem der vorhergehenden Ansprüche, **dadurch gekennzeichnet, dass** das Schaltermodul (76) einer Antirücklaufdiode (77) zugeordnet ist, die fähig ist, jeden Strom daran zu hindern, zur ersten Anschlussschnittstelle (70) zu fließen, wenn das Schaltermodul (76) in der offenen Stellung ist.

6. Vorrichtung nach einem der vorhergehenden Ansprüche, **dadurch gekennzeichnet, dass** sie einen Master-Knoten in einem LIN-Netz bildet.

7. Vorrichtung nach einem der Ansprüche 1 bis 5, **dadurch gekennzeichnet, dass** sie einen Slave-Knoten in einem LIN-Netz bildet.

8. Vorrichtung nach einem der vorhergehenden Ansprüche, **dadurch gekennzeichnet, dass** der erste Spannungswert in der Größenordnung von 12 Volt liegt, und der zweite Spannungswert in der Größenordnung von 48 Volt liegt.

## Claims

1. Electrical or electronic device (7) capable of being supplied in operation by a first voltage value generated by a first electrical network (3) and by a second voltage value greater than the first voltage value and generated by a second electrical network (8), the apparatus comprising:
- a first connection interface (70) capable of being linked, under normal connection conditions, to a ground conductor and a voltage conductor of the first electrical network (3) and to a serial bus system (75) capable of carrying data;
- a second connection interface (71) capable of being linked to a ground conductor and a voltage conductor of the second electrical network (8); each connection interface (70, 71) comprising a ground connection and the ground connections of the two connection interfaces (70, 71) being linked together to form a common ground;
- a control module (74) supplied by the first voltage value and capable of receiving and/or transmitting data over said bus (75); and
- at least one switching module (76) interposed in series between said bus (75) and the control module (74), the switching module (76) switching to a closed position, when sending and/or receiving data, and to an open position when all inputs/outputs of the first connection interface (70) are linked together.

2. Device according to Claim 1, **characterised in that** said serial bus system (75) is a LIN bus.

3. Device according to any one of the preceding claims, **characterised in that** said second connection interface (71) is capable of being linked to said ground conductor and to said voltage conductor of the second electrical network (8) in said normal conditions.

4. Device according to any one of the preceding claims, **characterised in that** said switching module (76) comprises a MOSFET transistor supplied with voltage by the first electrical network (3).

5. Device according to any one of the preceding claims, **characterised in that** the switching module (76) is associated with a blocking diode (77) adapted to prevent all current from flowing towards the first connection interface (70) when the switching module (76) is in the open position.

6. Device according to any one of the preceding claims, **characterised in that** it forms a master node in a LIN network.

7. Device according to any one of the preceding Claims 1 to 5, **characterised in that** it forms a slave node in a LIN network.

8. Device according to any one of the preceding claims, **characterised in that** the first voltage value is in the order of 12 volts, and the second voltage value is in the order of 48 volts.
